# EUROPÄISCHE PATENTSCHRIFT

(11) **EP 2 026 628 B1**
(45) Veröffentlichungstag und Bekanntmachung des Hinweises auf die Patenterteilung: **03.03.2010**
(21) Anmeldenummer: 07015923.1
(22) Anmeldetag: 14.08.2007
(51) Int. Cl.: H05B 3/00, B29B 13/02, B29C 51/42

(54) **Vorrichtung zum Erwärmen einer Folie**
Device for heating a film
Dispositif destiné au réchauffement d'une feuille

(43) Veröffentlichungstag der Anmeldung: 18.02.2009
(73) Patentinhaber: UHLMANN PAC-SYSTEME GmbH & Co. KG, 88471 Laupheim (DE)
(72) Erfinder: Matzenmüller, Jürgen, 88416 Bellamont (DE); Singer, Anton, 88471 Untersulmentingen (DE); Grube, Wolfgang, 88400 Biberach (DE)
(74) Vertreter: Wächter, Jochen

(56) Entgegenhaltungen:
- EP-A- 1 645 400
- DE-U1- 20 020 149
- US-A- 3 654 471

## Beschreibung

Die Erfindung betrifft eine Vorrichtung zum Erwärmen einer Folie, insbesondere einer Folie in einer Heizstation einer Thermoformmaschine, mit mindestens einem der Folie zuweisenden Emitter mit einer in einem Glaskolben angeordneten Emitterwendel zur Emission von Wärmestrahlung, mit einem den Emitter auf der der Folie abgewandten Seite und seitlich kapselnden Gehäuse, wobei Mittel zur Kühlung des Glases des Glaskolbens an den Emitterenden vorgesehen sind.

Eine derartige Vorrichtung zum Erwärmen einer Folie ist aus der DE 10 2006 022 263.5 als nicht vorveröffentlichte deutsche Patentanmeldung derselben Anmelderin bekannt, die sich in der Praxis in dem Sinne gut bewährt hat, dass mit dieser Vorrichtung zuverlässig und schnell die Folie in einer Thermoformmaschine auf die zum Verformen erforderliche Temperatur erwärmt werden kann. Als störend hat sich dabei allerdings erwiesen, dass für den Betrieb dieser Vorrichtung ein sehr hoher Energieeinsatz erforderlich ist, da beispielsweise bei transparenten Polypropylen-Kunststofffolien bei einer Foliengeschwindigkeit von 20 m/min 37 KW als Startleistung bereitgestellt werden müssen, um eine stillstehende Folie ausreichend schnell zu erwärmen, obwohl eine theoretische Abschätzung zeigt, dass ausgehend von der Wärmekapazität einer Polypropylen-Kunststofffolie und einer Foliengeschwindigkeit von 20 m/min eine geringe Heizleistung ausreichen könnte.

Eine Vorrichtung der eingangs genannten Art ist aus der DE 200 20 149 U1 bekannt, die dazu dient, eine Bestrahlungszone mit sehr hoher Strahlungsflussdichte bereit zu stellen, dabei aber eine lange Lebensdauer der Strahlungsquelle zu erzielen, wozu zur Wärmeabfuhr die Enden des Glaskörpers gekühlt werden.

Eine Vorrichtung mit gekühlten Enden des Glaskörpers zur Verlängerung der Lebensdauer ist auch in der US 3 654 471 beschrieben.

Die EP 1 645 400 A1 der Anmelderin offenbart ein Verfahren zum Starten und Stoppen einer kontinuierlich arbeitenden Thermoformmaschine mit einer Heizstation unter Verwendung einer gezielt bewegten Abschirmplatte.

Der Erfindung liegt daher die Aufgabe zugrunde, eine Vorrichtung der eingangs genannten Art so auszubilden, dass bei einem einfachen Aufbau der Mittel deren Funktionsweise über die gesamte Lebensdauer des Emitters sichergestellt ist. Aufgabe ist weiterhin ein Verfahren zum Betrieb bereitzustellen, durch das der Energieverbrauch reduziert und der Startvorgang vereinfacht wird.

Diese Aufgabe wird für den die Vorrichtung betreffenden Teil nach der Erfindung bei einer Vorrichtung der eingangs genannten Art unter anderem dadurch gelöst, dass die Mittel zur Kühlung durch jeweils eine geschwärzte und gekühlte Bohrung der Emitterhalterung gebildet sind, in denen die Enden des Emitters angeordnet sind.

Bei den Emittern werden die Emitterenden gequetscht, damit der Glaskolben des Emitters die Emitterwendel luftdicht abschließt. In dieser Quetschstelle ist ein Metallblättchen zur elektrischen Energieversorgung der Emitterwendel angeordnet, wobei es bei Betriebstemperaturen über 300 °C infolge unterschiedlicher Wärmeausdehnung von Glas und Metall zu Wärmespannungen kommen und Umgebungsluft das Metallblättchen oder die Emitterwendel schädigen kann. Durch Kühlung und Verlängerung der Emitterenden ist es nun möglich, die Emitterenden auf Temperaturen unter 300°C zu kühlen und damit zu schützen, zugleich aber durch die schlechte Wärmeleitfähigkeit des Glases für den Glaskolben im Bereich der Emitterwendel eine höhere Temperatur zu zu lassen. Die Glaskolben werden dadurch als Sekundäremitter wirksam, die ihre Wärmestrahlung in einem Bereich abstrahlen, der besonders gut von der Folie absorbiert werden kann, was zu einem deutlich geringeren Energieverbrauch führt. Der Aufbau mit der geschwärzten und gekühlten Bohrung hat sich als besonders einfach bewährt.

Der Minimierung von Verlusten dient auch, dass auf der dem Emitter gegenüberliegenden Seite der Folie ein Gegenreflektor angeordnet ist und dass in dem Gehäuse gegenüber diesem thermisch isoliert auf der der Folie abgewandten Seite des Emitters ein Reflektor angeordnet ist.

Die Verwendung eines Reflektors, um den Wirkungsgrad einer auf Wärmestrahlung basierenden Heizstation zu verbessern, ist prinzipiell bekannt, wozu in der eingangs genannten Heizstation die Innenoberfläche des Gehäuses als Reflektor ausgestaltet ist, um die von dem Emitter nicht in Richtung der Folie, sondern zur Gehäuseinnenwand emittierte Strahlung auch in Richtung der Folie lenken zu können. Da allerdings in der Praxis nie ein idealer Reflektor vorliegt, sondern stets Verluste durch Absorption auftreten, besteht das Erfordernis, das Gehäuse zu kühlen, um gegenüber der Umgebung und insbesondere den Nutzern einen sicheren Betrieb ohne Verletzungsgefahr zu ermöglichen. Die Erfindung beschreitet nun einen anderen Weg, in dem nicht primär die Innenoberfläche des Gehäuses als Reflektor genutzt wird, sondern in dem Gehäuse ein zusätzlicher Reflektor, thermisch gegenüber dem Gehäuse bestmöglich isoliert, eingesetzt wird, der nicht auf die Umgebungstemperatur abgekühlt werden muss. Dieser Reflektor kann in Keramikausführung damit auch eine Wirkung als Wärmestrahler entfalten, indem die nicht reflektierten, sondern absorbierten Anteile zur Erwärmung des Reflektors führen, der sich dadurch aufheizt und selber zum Wärmestrahler wird, der dem Energiebedarf des Primärstrahlers reduziert. Da der vorzugsweise als keramische Platte gebildete Reflektor auch die gleiche Wärmestrahlung nach hinten abgeben würde, ist hier entweder eine Isolierung oder eine vergoldete Reflektorfläche angeordnet, um die Verluste zu minimieren. Dadurch ergibt sich der Vorteil dieser Anordnung, dass durch die hohen Oberflächentemperaturen der vergoldeten bzw. keramischen Platte sich keine Foliendämpfe niederschlagen.

Durch dieses Konzept insgesamt ist es möglich, den Leistungsbedarf um ca. 60 % zu senken, was im praktischen Betrieb immense Vorteile bietet, da geringere Energiekosten als bei der bisher verwendeten Heizstation anfallen, darüber hinaus kleinere Leitungsquerschnitte für die elektrischen Anschlüsse und eine reduzierte elektrische Absicherung ausreichend sind und zudem ein wesentlich kleineres Kühlgerät benötigt wird, was in der Anschaffung und im Unterhalt billiger ist und weniger Aufstellplatz erfordert.

Im Rahmen der Erfindung ist es bevorzugt, wenn der quer zur Folienlaufrichtung ausgerichtete Emitter mehrfach vorgesehen ist in einer parallel zur Folienlaufrichtung orientierte Reihung, um so in einfacher Weise durch einen modularen Aufbau die erforderliche Heizleistung zu erzielen.

Weiterhin ist im Rahmen der Erfindung vorgesehen, dass der Emitter durch einen IR-Heizstrahler gebildet ist und dass in dem Gehäuse ein Strahlungssensor angeordnet ist, der in einen Regelkreis zur Temperaturregelung des Gehäuseinnenraums, insbesondere der Glaskolbentemperatur bei Produktionsstopp, integriert ist. Diese Ausführungsform zeichnet sich insbesondere dadurch aus, dass durch die Präsenz des Strahlungssensors ein Standby-Betrieb ermöglicht wird, indem die Erkenntnis ausgenutzt wird, dass auch die Glaskolben der Emitter als Wärmestrahler und Sekundäremitter fungieren, die nach Erreichen ihrer Betriebstemperatur Wärmestrahlung in dem zum Erwärmen der Folie günstigen Wellenlängenbereich emittieren. Damit nach einer Unterbrechung für den erneuten Start der Vorrichtung ein möglichst geringer Leistungsbedarf erforderlich ist, wird in dem Standby-Betrieb durch den Strahlungssensor die Temperatur der Glaskolben geregelt, wozu zweckmäßigerweise der Strahlungssensor zwischen dem Reflektor und dem Emitter angeordnet ist. Vorteilhaft ist es dabei, wenn der Strahlungssensor als Thermoelement ausgeführt ist, weil bei diesem sich keine Ablagerungen an dem Strahlungssensor bilden, da eine ständige Reinigung mittels Pyrolyse stattfindet, die bei den hohen Temperaturen im Inneren des Gehäuses permanent abläuft. Dies wäre bei der Erfassung mit einem Pyrometer nicht gegeben.

Zur weiteren Steigerung des Wirkungsgrades der erfindungsgemäßen Vorrichtung ist es möglich, dass die inneren Oberflächen des Gehäuses durch poliertes Aluminium gebildet sind. Alternativ oder auch ergänzend besteht die Möglichkeit, dass die der Folie zugewandten Oberflächen des Gehäuse und/oder des Reflektors mit einer Goldschicht vergoldet sind.

Wenn der Reflektor mit einer Goldschicht vergoldet ist, so ist zur Begrenzung der Selbstaufheizung vorgesehen, dass die Rückseite des Reflektors mit einer gut emittierenden Beschichtung versehen ist.

Um die gewünschten Materialeigenschaften des Reflektors mit einer sehr gut reflektierenden, zur Folie gerichteten Vorderseite und einer gut abstrahlenden Rückseite zu erzielen, ist die Materialwahl so getroffen, dass der Reflektor aus Keramik oder Quarzglas oder Glaskeramik oder Edelstahl besteht. Die Vorderseite wird dabei vorzugsweise vergoldet und die Rückseite im Falle der Verwendung von Quarzglas mit einem Emissionsgrad von bereits 0,9 unbehandelt gelassen, oder bei Verwendung von Edelstahl mit schwarzer Farbe beschichtet.

Weiterhin im Rahmen der Erfindung bevorzugt ist es, wenn der insbesondere aus Glaskeramik gebildete Reflektor zweiteilig gebildet ist mit einer Reflektorplatte und einer auf der der Folie abgewandten Seite angeordneten Kühlplatte, die dafür sorgt, dass die durch Reflexionsverluste in der Reflektorplatte absorbierte und für die Temperaturkonstanz der Reflektorplatte absorbierte und für die Temperaturkonstanz der Reflektorplatte nicht benötigte Energie in die Kühlplatte abgegeben wird. Durch die erhöhte Temperatur der Reflektorplatte wird Kondensation durch Folienausgasung verhindert.

Dabei bietet es sich an, dass die Kühlplatte mit einem Kühlkreislauf eines Kühlmediums verbunden ist. Um die gewünschte thermische Isolierung des Reflektors gegenüber dem Gehäuse zu erzielen, ist der Reflektor an den Wandungen des Gehäuses gelagert und liegt diesen Wandungen nur mit Linienberührungen an. Die inneren reflektierenden Flächen sind Punkt- oder also gegenüber dem Gehäuse termisch isoliert.

Besonders bevorzugt im Rahmen der Erfindung ist es, wenn ein Schott vorgesehen ist, das aus einer aus dem Gehäuse entfernten Positionen in eine in das Gehäuse zwischen der Folie und dem Emitter eingefahrenen Position verstellt werden kann. Durch dieses Schott ist es möglich, bei einer Unterbrechung des Betriebes, wenn die Folie nicht weiter vorgeschoben wird, die sich in dem Gehäuse befindende Folie vor der Wärmestrahlung zu schützen, indem die Folie durch das Schott abgeschattet wird. Ein effektiverer Schutz der Folie ergibt sich, wenn dass Schott zweiteilig mit einem ersten Schottteil und einem zweiten Schottteil gestaltet ist, dass in dem ersten Schottteil mit einer Unterdruckquelle verbundene Saugkanäle ausgebildet sind und dass mindestens eines der Schottteile mit einem Kühlmedium verbunden ist. Dadurch besteht die Möglichkeit, dass die Folie auf das erste Schottteil gesaugt wird und so sehr schnell die Temperatur des ersten Schottteils annimmt. Das hat besondere Vorteile, da die vordere Kante des Schotts während der Schließbewegung den Strahlungsraum in dem Gehäuse nicht 100-prozentig effektiv abdecken kann, so dass Bereiche des Folienbandes, welche beim nächsten Produktionsstart erwärmt werden sollen, sich auch teilweise erwärmen. Je nach Dauer der Unterbrechung hätten diese Folienbereiche eine unterschiedliche Temperatur, so dass beim erneuten Start die Endtemperatur der Folie nach der Erwärmung nicht genau definiert ist. Um dies zu vermeiden, wird die Folie auf eine vordefinierte Temperatur, im Idealfall Raumtemperatur, abgekühlt, was besonders einfach und effektiv durch den Einsatz der Saugkanäle in Verbindung mit dem gekühlten ersten Schottteil erzielt wird.

Das untere Schottteil besteht dabei vorzugsweise aus vergoldetem Aluminium, um den Leistungsbedarf im Standby-Betrieb gering zu halten.

Im Rahmen der Erfindung ist weiterhin vorgesehen, dass am stromauf gelegenen Bereich des Gehäuses eine Saugvorrichtung zur Heizdampfabsaugung angeordnet ist. Durch diese Gestaltung werden die Anforderungen an die Pyrolyse gesenkt, da die von der Folie aufsteigenden Heizdämpfe abgesaugt werden und sich somit nicht auf Oberflächen niederschlagen können, die dann erst durch die Pyrolyse gereinigt werden müssen.

Wenn der Antrieb des Schotts zu dessen Positionierung zwischen den beiden Extrempositionen geeignet ist, besteht die Möglichkeit, den Strahlungsraum bzw. die Strahlungsfläche in dem Gehäuse zu verkürzen durch ein nur teilweise geöffnetes Schott, um bei geringen Foliengeschwindigkeiten eine Reduzierung der Totzeit im Regelkreis für die Folientemperatur zu erzielen, wobei die Stellung des Schotts durch einen Regelkreis beeinflusst sein kann, der die mit einem Pyrometer erfasste Temperatur der Folie auswertet.

Der das Verfahren betreffende Teil der Aufgabe wird gelöst durch ein Verfahren zum Betrieb einer Vorrichtung zum Erwärmen einer Folie, die einem der Folie zuweisenden Emitter mit einer in einem Glaskolben angeordneten Emitterwandel aufweist, wobei die Emitterenden durch eine Kühleinrichtung gekühlt und die Temperatur des Glaskolbens mit einem Strahlungssensor überwacht wird, und wobei zum Starten und Stoppen der Vorrichtung ein Standby-Betrieb generiert wird, in dem die Heizleistung auf die Aufrechterhaltung der Temperatur des Glaskolbens begrenzt ist, wobei dieses Verfahren die permanente Funktion des Glaskolbens als Sekundäremitter ermöglicht und so die Reaktionszeiten beim Starten/Stoppen der Vorrichtung verkürzt und Energie spart.

Im folgenden wird die Erfindung an einem in der Zeichnung dargestellten Ausführungsbeispiel näher erläutert; es zeigen:
- Fig. 1: einen Längsschnitt durch eine schematisch, vereinfacht dargestellte Vorrichtung,
- Fig. 2: eine perspektivische Darstellung des Gehäuses mit dem Emitter,
- Fig. 3: eine schematische, perspektivische Darstellung des Schotts, und

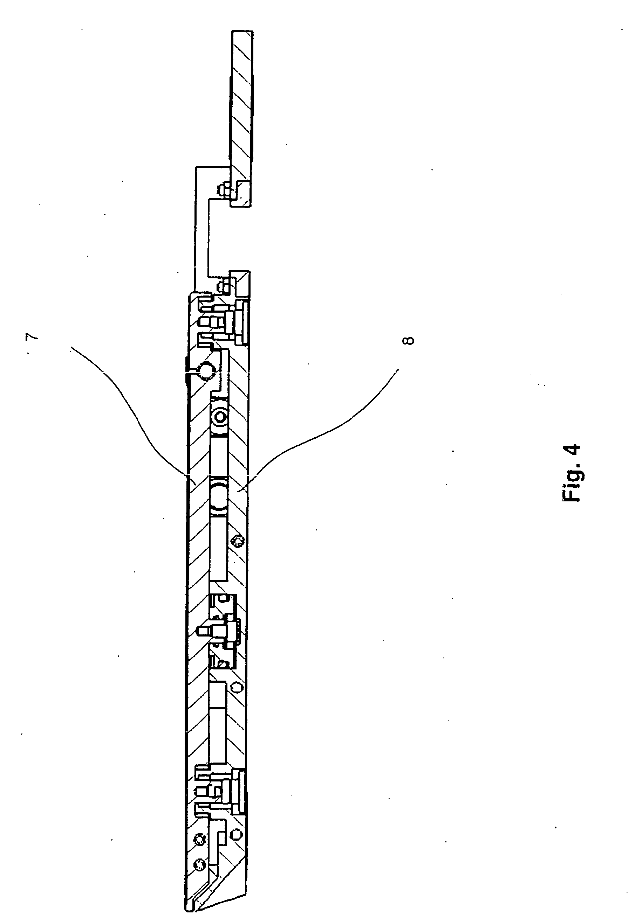

- Fig. 4: einen Längsschnitt durch das Schott aus Figur 3.

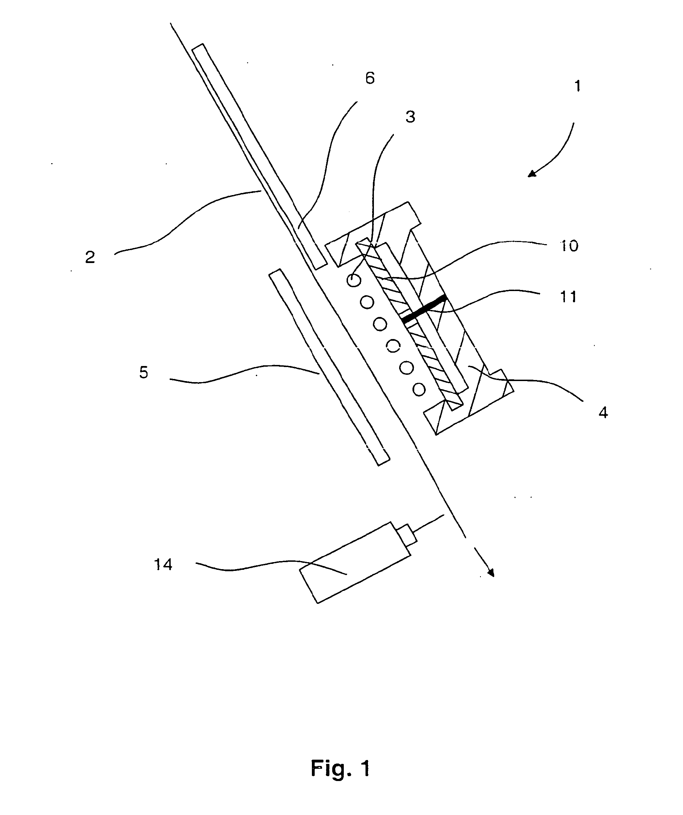

In der Figur 1 ist eine Vorrichtung 1 gezeigt, die zum Erwärmen einer Folie 2 dient, wobei eine derartige Vorrichtung insbesondere als Heizstation in einer Thermoformmaschine eingesetzt wird, in der von einer Vorratsrolle herangeförderte Folie 2 soweit erwärmt wird, dass diese in einer nachfolgenden Formstation zur Ausbildung von Näpfen verformt werden kann. Die Vorrichtung 1 umfasst mehrere in einer parallel zur Folienlaufrichtung orientierten Reihung angeordnete Emitter 3, nämlich IR-Heizstrahler zur Emission von Wärmestrahlung, die in einem Gehäuse 4 angeordnet sind, wobei die Emitterenden in geschwärzten und gekühlten Bohrungen der Emitterhalterung angeordnet sind, um eine Kühlung der Emitterenden zu ermöglichen. Das Gehäuse 4 kapselt die Emitter 3 auf der der Folie 2 abgewandten Seite sowie seitlich. Auf der dem Emitter 3 gegenüberliegenden Seite der Folie 2 ist ein Gegenreflektor 5 angeordnet, der von den Emittern 3 ausgesandte Strahlung, die von der Folie 2 nicht absorbiert wird, wieder auf die Folie 2 zurückreflektiert, um eine erneute Absorption zu ermöglichen. Die Vorrichtung 1 umfasst weiterhin ein Schott 6, das aus einer aus dem Gehäuse 4 entfernten Position, die in der Figur 1 dargestellt ist, in eine in das Gehäuse 4 zwischen der Folie 2 und den Emittern 3 eingefahrene Position verstellt werden kann, wobei das Schott 6 zweiteilig mit einem ersten Schottteil 7 und einem zweiten Schottteil 8 gestaltet ist. In dem ersten Schottteil 7 sind mit einer Unterdruckquelle verbundene Saugkanäle 9 ausgebildet und das erste Schottteil 7 ist mit einem Kühlmedium verbunden.

An den Wandungen des Gehäuses 4 ist thermisch gegenüber diesem isoliert ein Reflektor 10 angeordnet, der zur thermischen Isolierung den Wandungen nur mit Punkt- oder Linienberührungen anliegt.

Der Emitter 3 ist durch den IR-Heizstrahler gebildet mit einer in einem Glaskolben angeordneten, als Carbonband realisierten, Emitterwendel, wobei in dem Gehäuse 4 ein Strahlungssensor 11 angeordnet ist, der in einen Regelkreis zur Temperaturregelung der Glaskolbentemperatur während des Standby-Betriebs integriert ist. Der Strahlungssensor 11 ist zwischen dem Reflektor 10 und dem Emitter 3 angeordnet und als Thermoelement ausgeführt.

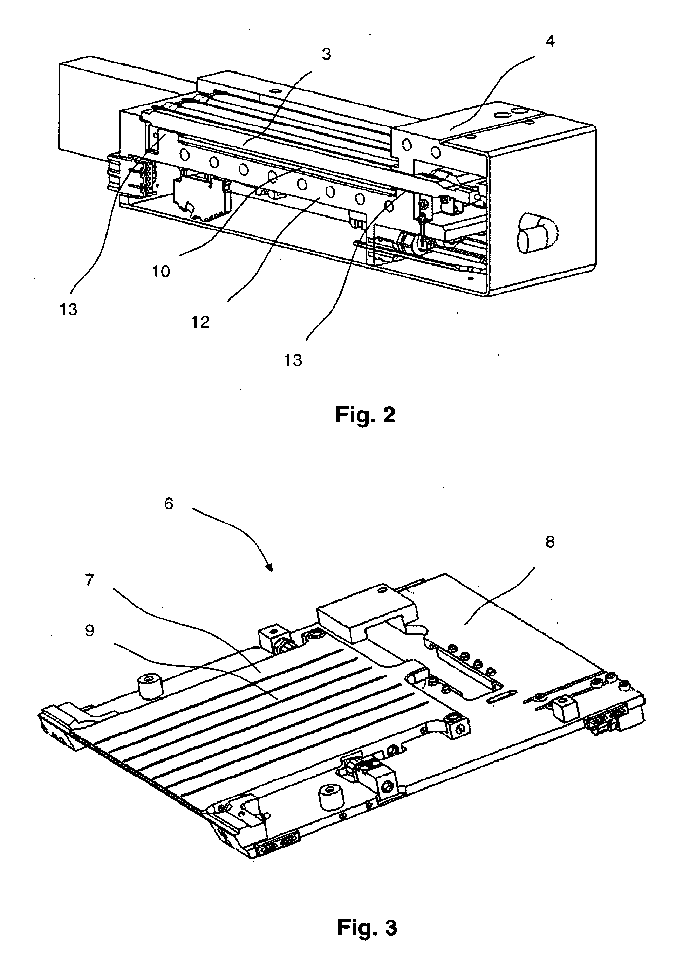

Die inneren Oberflächen des Gehäuses 4 sind durch poliertes Aluminium gebildet, wobei zur Verbesserung der optischen Eigenschaften die der Folie 2 zugewandten Oberflächen des Gehäuses 4 und/oder des Reflektors 10 mit einer Goldschicht vergoldet sind. Der Reflektor 10 selber besteht aus Keramik, Quarzglas oder Glaskeramik oder Edelstahl. Nach einem in der Fig. 2 dargestellten Ausführungsbeispiel besteht die Möglichkeit, dass der Reflektor 10 zweiteilig gebildet ist mit einer Reflektorplatte und einer auf der Folie 2 abgewandten Seite angeordneten Kühlplatte 12, die mit einem Kühlkreislauf eines Kühlmediums verbunden ist, so dass die Reflektorplatte keinen direkten Kontakt mit dem Kühlmedium hat, sondern die Reflektionsverluste von ca. 700 W durch Wärmestrahlung und Konvektion auf die Kühlplatte 12 übertragen und abgeführt werden.

Dadurch kann die Arbeitstemperatur der Reflektorplatte auf ca. 450°C eingestellt werden, während die Kühlplatte 12 bis ca. 20°C gekühlt werden kann. Bei Verwendung einer Reflektorplatte aus Keramik wird der Zwischenraum zwischen Reflektor 10 und Gehäuse 12 mit Isoliermaterial gefüllt, oder die Gehäuseoberfläche gut reflektierend ausgebildet. Damit wird eine höhere Betriebstemperatur des Reflektors erreicht und damit die in Folienrichtung abgestrahlte Wärmestrahlung erhöht.

Ein Pyrometer 14 kontrolliert die Erwärmung der Folie 2 außerhalb des Gehäuses 4.

Bei einem Betrieb der erfindungsgemäßen Vorrichtung 1 ergeben sich die nachfolgend geschildeten Abläufe. Bei einem Start der Vorrichtung 1 wird zunächst in dem Standby-Betrieb übergegangen, um die Wirkung des Glaskolbens als Sekundäremitter zu erzielen, und dann das Schott aus dem Gehäuse 4 entfernt, und zwar in vorteilhafter und zweckmäßiger Weise gemäß der Offenbarung der DE 10 2004 049 267 A1. Während des Standbybetriebs wird die von den IR-Strahlern ausgesandte Wärmestrahlung vom Glaskolben, Emitterwendel und Gehäuseoberfläche reflektiert bzw. absorbiert wird und führt damit zu einer Erwärmung dieser Komponenten. Durch die Erwärmung des Glaskolbens wird dieser ebenfalls zu einem Sekundäremitter, der Wärmestrahlung aussendet. Durch die in dem Gehäuseinneren und insbesondere auf den Reflektor 10 herrschende erhöhte Temperatur tritt dort permanent Pyrolyse auf, so dass Ablagerungen, die von dem Heizdampf der Folie 2 stammen permanent entfernt werden, wobei diese Funktion unterstützt wird durch die Heizdampfabsaugung. Muss der Produktionsprozess unterbrochen werden, wird zusammen mit der Folie 2 das Schott 6 in das Gehäuseinnere eingefahren und erneut der Standby-Betrieb initiiert, wobei weiterhin die Folie 2 an das Schott 6 angesaugt wird, um der Folie 2 eine vorbestimmte Temperatur zuzuweisen, von der man ausgehen kann, wenn die Produktion erneut aufgenommen wird, wozu das Schott 6 aus dem Gehäuse 4 entfernt und die Heizleistung der Emitter 3 aus dem Standby-Betrieb wieder auf das Produktionsniveau angehoben wird.

## Patentansprüche

1. Vorrichtung zum Erwärmen einer Folie (2), insbesondere einer Folie (2) in einer Heizstation einer Thermoformmaschine, mit mindestens einem der Folie (2) zuweisenden Emitter (3) mit einer in einem Glaskolben angeordneten Emitterwendel zur Emission von Wärmestrahlung, mit einem den Emitter (3) auf der der Folie (2) abgewandten Seite und seitlich kapselnden Gehäuse (4), wobei Mittel zur Kühlung des Glases des Glaskolbens an den Emitterenden vorgesehen sind, **dadurch gekennzeichnet, dass** die Mittel zur Kühlung durch jeweils eine geschwärzte und gekühlte Bohrung der Emitterhalterung gebildet sind, in denen die Enden des Emitters (3) angeordnet sind.

2. Vorrichtung nach Anspruch 1, **dadurch gekennzeichnet, dass** auf der dem Emitter (3) gegenüberliegenden Seite der Folie (2) ein Gegenreflektor (5), angeordnet ist, und in dass dem Gehäuse (4) gegenüber diesem thermisch isoliert auf der der Folie (2) abgewandten Seite des Emitters (3) ein Reflektor (10) angeordnet ist.

3. Vorrichtung nach Anspruch 1 oder 2, **dadurch gekennzeichnet, dass** quer zur Folienlaufrichtung ausgerichtete der Emitter (3) mehrfach vorgesehen ist in einer parallel zur Folienlaufrichtung orientierten Reihung.

4. Vorrichtung nach einem der Ansprüche 1 bis 3, **dadurch gekennzeichnet, dass** der Emitter (3) durch einen IR-Heizstrahler gebildet ist und dass in dem Gehäuse (4) ein Strahlungssensor (11) angeordnet ist, der in einen Regelkreis zur Temperaturregelung der Glaskolbentemperatur während des Standby-Betriebs integriert ist.

5. Vorrichtung nach Anspruch 4, **dadurch gekennzeichnet, dass** der Strahlungssensor (11) zwischen dem Reflektor (10) und dem Emitter (3) angeordnet ist.

6. Vorrichtung nach Anspruch 4 oder 5, **dadurch gekennzeichnet, dass** der Strahlungssensor (11) als Thermoelement ausgeführt ist.

7. Vorrichtung nach einem der Ansprüche 1 bis 6, **dadurch gekennzeichnet, dass** die inneren Oberflächen des Gehäuses (4) durch poliertes Aluminium gebildet sind.

8. Vorrichtung nach einem der Ansprüche 1 bis 7, **dadurch gekennzeichnet, dass** mindestens die der Folie (2) zugewandten Oberflächen des Gehäuses (4) und/oder des Reflektors (10) mit einer Goldschicht vergoldet sind.

9. Vorrichtung nach einem der Ansprüche 1 bis 8, **dadurch gekennzeichnet, dass** die Rückseite des Reflektors (10) mit einer gut emittierenden Beschichtung versehen ist.

10. Vorrichtung nach einem der Ansprüche 1 bis 8, **dadurch gekennzeichnet, dass** der Reflektor (10) aus Keramik oder Quarzglas oder Glaskeramik oder Edelstahl besteht.

11. Vorrichtung nach einem der Ansprüche 1 bis 10, **dadurch gekennzeichnet, dass** der Reflektor (10) zweiteilig gebildet ist mit einer Reflektorplatte und einer auf der der Folie abgewandten Seite angeordneten Kühlplatte (12).

12. Vorrichtung nach Anspruch 11, **dadurch gekennzeichnet, dass** die Kühlplatte (12) mit einem Kühlkreislauf eines Kühlmediums verbunden ist.

13. Vorrichtung nach einem der Ansprüche 1 bis 10, **dadurch gekennzeichnet, dass** der Reflektor (10) an den Wandungen des Gehäuses (4) gelagert ist und diesen Wandungen nur mit Punkt- oder Linienberührungen anliegt.

14. Vorrichtung nach einem der Ansprüche 1 bis 13, **dadurch gekennzeichnet, dass** ein Schott (6) vorgesehen ist, das aus einer aus dem Gehäuse (4) entfernten Position in eine in das Gehäuse (4) zwischen der Folie (2) und dem Emitter (3) eingefahrenen Position verstellt werden kann.

15. Vorrichtung nach Anspruch 14, **dadurch gekennzeichnet, dass** das Schott (6) zweiteilig mit einem ersten Schottteil (7) und einem zweiten Schottteil (8) gestaltet ist, dass in dem ersten Schott (6) mit einer Unterdruckquelle verbundene Saugkanäle (9) ausgebildet sind und dass mindestens eines der Schottteile (7, 8) mit einem Kühlmedium verbunden ist.

16. Vorrichtung nach einem der Ansprüche 1 bis 15, **dadurch gekennzeichnet, dass** am stromauf gelegenen Bereich des Gehäuses (4) eine Saugvorrichtung zur Heizdampfabsaugung angeordnet ist.

17. Vorrichtung nach einem der Ansprüche 14 bis 16, **dadurch gekennzeichnet, dass** der Antrieb des Schotts (6) zu dessen Positionierung zwischen den beiden Positionen geeignet ist.

18. Verfahren zum Betrieb einer Vorrichtung zum Erwärmen einer Folie (2), die einen der Folie (2) zuweisenden Emitter (3) mit einer in einem Glaskolben angeordneten Emitterwendel aufweist, wobei die Emitterenden durch eine Kühleinrichtung gekühlt werden, nach einem der Ansprüche 4 bis 17, **dadurch gekennzeichnet, dass** die Temperatur des Glaskolbens mit einem Strahlungssensor (11) überwacht wird, und wobei zum Starten und Stoppen der Vorrichtung ein Standby-Betrieb generiert wird, indem die Heizleistung auf die Aufrechterhaltung der Temperatur des Glaskolbens begrenzt ist.

## Claims

1. Device for heating a film (2), in particular a film (2) in a heating station of a thermoforming machine, comprising at least one emitter (3), which faces the film (2), comprising an emitter coil arranged in a glass bulb for emitting thermal radiation, comprising a housing (4) encapsulating the emitter (3) on the side remote from the film (2), means for cooling the glass of the glass bulb being provided on the ends of the emitter, **characterised in that** the means for cooling are in each case formed by a blackened and cooled aperture in the emitter mounting, the ends of the emitter (3) being arranged in said apertures.

2. Device according to claim 1, **characterised in that** a counter reflector (5) is arranged on the side of the foil (2) opposite the emitter (3), and **in that** a reflector (10) is arranged in the housing (4) and thermally insulated therefrom, on the side of the emitter (3) remote from the film (2).

3. Device according to either claim 1 or claim 2, **characterised in that** a plurality of emitters (3) are provided, aligned transverse to the direction in which the film extends, in a sequence oriented parallel to the direction in which the film extends.

4. Device according to any one of claims 1 to 3, **characterised in that** the emitter (3) is formed by an IR radiation heater, and **in that** a radiation sensor (11) is arranged in the housing (4) and is integrated into a control circuit for controlling the temperature of the glass bulb during standby operation.

5. Device according to claim 4, **characterised in that** the radiation sensor (11) is arranged between the reflector (10) and the emitter (3).

6. Device according to either claim 4 or claim 5, **characterised in that** the radiation sensor (11) is configured as a thermocouple element.

7. Device according to any one of claims 1 to 6, **characterised in that** the inner surfaces of the housing (4) are formed from polished aluminium.

8. Device according to any one of claims 1 to 7, **characterised in that** at least those surfaces of the housing (4) and/or of the reflector (10) which face the film (2) are gilded with a layer of gold.

9. Device according to any one of claims 1 to 8, **characterised in that** the rear face of the reflector (10) is provided with a highly emissive coating.

10. Device according to any one of claims 1 to 8, **characterised in that** the reflector (10) consists of ceramic material or fused quartz or glass ceramic material or high-grade steel.

11. Device according to any one of claims 1 to 10, **characterised in that** the reflector (10) is formed in two parts, comprising a reflector plate and a cooling plate (12) arranged on the side remote from the film.

12. Device according to claim 11, **characterised in that** the cooling plate (12) is connected to a cooling circuit for a cooling medium.

13. Device according to any one of claims 1 to 10, **characterised in that** the reflector (10) is mounted on the walls of the housing (4) and makes only point or line contact with these walls.

14. Device according to any one of claims 1 to 13, **characterised in that** a partition (6) is provided and can be moved from a position remote from the housing (4) to a position retracted into the housing (4) between the film (2) and the emitter (3).

15. Device according to claim 14, **characterised in that** the partition (6) is formed in two parts, comprising a first partition part (7) and a second partition part (8), **in that** suction channels (9) connected to a vacuum source are formed in the first partition (6), and **in that** at least one of the partition parts (7, 8) is provided with a cooling medium.

16. Device according to any one of claims 1 to 15, **characterised in that** a suction device for the evacuation of heating steam is arranged on the region of the housing (4) lying upstream.

17. Device according to any one of claims 14 to 16, **characterised in that** the drive for the partition (6) is capable of positioning it between the two positions.

18. Method for operating a device for heating a film (2), which device comprises an emitter (3), which faces the film (2), comprising an emitter coil arranged in a glass bulb, the ends of the emitter being cooled by a cooling means, according to any one of claims 4 to 17, **characterised in that** the temperature of the glass bulb is monitored with a radiation sensor (11), standby operation being produced to start and stop the device **in that** the provision of heat is limited to maintaining the temperature of the glass bulb.

## Revendications

1. Dispositif à échauffer une feuille (2), en particulier une feuille (2) dans un poste de chauffage d'une machine de thermoformage, comprenant au moins un émetteur (3) affecté à la feuille (2) comprenant une spirale émettrice disposée dans une ampoule de verre pour l'émission de rayonnement thermique comprenant un boîtier (4) encapsulant l'émetteur (3) sur le côté opposé à la feuille (2) et latéralement, des moyens pour le refroidissement du verre de l'ampoule étant prévus aux extrémités de l'émetteur, **caractérisé en ce que** les moyens pour le refroidissement sont formés par des perçages noircis et refroidis de la fixation d'émetteur, dans lesquels sont respectivement disposées les extrémités de l'émetteur (3).

2. Dispositif suivant la revendication 1, **caractérisé en ce qu'**un réflecteur antagoniste (5) est disposé sur le côté de la feuille (2) opposé à l'émetteur (3), et **en ce qu'**un réflecteur (10) est disposé dans le boîtier (4) thermiquement isolé par rapport à ce dernier, sur le côté de l'émetteur (3) opposé à la feuille (2).

3. Dispositif suivant les revendications 1 et 2, **caractérisé en ce que** l'émetteur (3) orienté transversalement à la direction de défilement de la feuille est prévu de façon multiple en une rangée orientée parallèlement à la direction de défilement de la feuille.

4. Dispositif suivant l'une des revendications 1 à 3, **caractérisé en ce que** l'émetteur (3) est formé par un émetteur radiant et **en ce qu'**un détecteur de rayonnement (11) est disposé dans le boîtier (4), lequel détecteur est intégré dans un circuit de régulation pour le réglage de la température de l'ampoule en verre pendant le fonctionnement en attente.

5. Dispositif suivant la revendication 4, **caractérisé en ce que** le détecteur de rayonnement (11) est disposé entre le réflecteur (10) et l'émetteur (3).

6. Dispositif suivant l'une des revendications 4 et 5, **caractérisé en ce que** le détecteur de rayonnement (11) est réalisé en tant qu'élément thermique.

7. Dispositif suivant l'une des revendications 1 à 6, **caractérisé en ce que** les surfaces intérieures du boîtier (4) sont formées par de l'aluminium poli.

8. Dispositif suivant l'une des revendications 1 à 7, **caractérisé en ce qu'**au moins les surfaces du boîtier (4) et/ou du réflecteur (10) tournées vers la feuille (2) sont dorées avec une couche d'or.

9. Dispositif suivant l'une des revendications 1 à 8, **caractérisé en ce que** le côté arrière du réflecteur (10) est muni d'un revêtement d'une bonne capacité d'émission.

10. Dispositif suivant l'une des revendications 1 à 8, **caractérisé en ce que** le réflecteur (10) se compose de céramique ou de verre de quartz ou de vitrocéramique ou d'acier spécial.

11. Dispositif suivant l'une des revendications 1 à 10, **caractérisé en ce que** le réflecteur (10) est formé en deux parties avec une plaque réfléchissante et une plaque réfrigérante (12) disposée sur le côté opposé à la feuille.

12. Dispositif suivant la revendication 11, **caractérisé en ce que** la plaque réfrigérante (12) est reliée à un circuit de refroidissement d'un agent réfrigérant.

13. Dispositif suivant l'une des revendications 1 à 10, **caractérisé en ce que** le réflecteur (10) est monté sur les parois du boîtier (4) et ne s'applique sur ces parois que par contacts ponctuels ou linéaires.

14. Dispositif suivant l'une des revendications 1 à 13, **caractérisé en ce qu'**il est prévu une cloison (6) qui peut être déplacée d'une position éloignée hors du boîtier (4) dans une position rentrée dans le boîtier (4) entre la feuille (2) et l'émetteur (3).

15. Dispositif suivant la revendication 14, **caractérisé en ce que** la cloison (6) est agencée en deux parties avec une première partie de cloison (7) et une seconde partie de cloison (8), que des canaux d'aspiration (9), reliés à une source de dépression, sont réalisés dans la première cloison (6), et qu'au moins l'une des parties de cloison (7, 8) est reliée à un agent réfrigérant.

16. Dispositif suivant l'une des revendications 1 à 15, **caractérisé en ce qu'**un dispositif d'aspiration pour l'aspiration de vapeur de chauffage est disposé sur la zone du boîtier (4) placée en amont.

17. Dispositif suivant l'une des revendications 14 à 16, **caractérisé en ce que** l'entraînement de la cloison (6) est adapté au positionnement de cette dernière entre les deux positions.

18. Procédé de fonctionnement d'un dispositif à échauffer une feuille (2), qui présente un émetteur (3) affecté à la feuille (2) comprenant une spirale émettrice disposée dans une ampoule de verre, les extrémités de l'émetteur étant refroidies par un dispositif de refroidissement, suivant l'une des revendications 4 à 17, **caractérisé en ce que** la température de l'ampoule est surveillée par un détecteur de rayonnement (11), et un fonctionnement en attente est alors généré pour le démarrage et l'arrêt du dispositif, la puissance calorifique étant limitée au maintien de la température de l'ampoule.
